(19)

**Europäisches Patentamt**
**European Patent Office**
**Office européen des brevets**

(11) **EP 4 671 331 A1**

(12) **EUROPEAN PATENT APPLICATION**

(43) Date of publication:
**31.12.2025 Bulletin 2026/01**

(21) Application number: **25176491.6**

(22) Date of filing: **14.05.2025**

(51) International Patent Classification (IPC):
***C09D 11/12*** (2006.01)

(52) Cooperative Patent Classification (CPC):
**C09D 11/12**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(71) Applicant: **Sicpa Holding SA**
**1008 Prilly (CH)**

(72) Inventors:
• **BONNEFOI, Caroline**
**74500 Publier (FR)**

• **LEFEBVRE, Olivier**
**1442 Montagny-près-Yverdon (CH)**
• **SPITTELER, Jean-Daniel**
**1041 Poliez-le-Grand (CH)**
• **WELLS, Frederick**
**1072 Forel (CH)**
• **SABOURIN, Maxime**
**1052 Le Mont-sur-Lausanne (CH)**
• **MAGNIN, Patrick**
**74500 Publier (FR)**

(74) Representative: **GatesIP**
**Dorfplatz 1**
**6060 Sarnen (CH)**

(54) **BIO-RENEWABLE OXIDATIVELY DRYING INTAGLIO INK**

(57) The invention provides a bio-renewable intaglio ink showing good set-off characteristics.

EP 4 671 331 A1

**Description**

## FIELD OF THE INVENTION

The present invention relates to the field of bio-renewable oxidatively drying inks suitable for intaglio printing of value documents and intaglio printing processes using oxidatively drying inks.

## BACKGROUND OF THE INVENTION

With the constantly improving quality of color photocopies and prints and, in an attempt, to protect security documents such as banknotes, value documents or cards, transportation tickets or cards, tax banderols, and product labels that have no reproducible effects against counterfeiting, falsifying or illegal reproduction, it has been the conventional practice to incorporate various security features in such documents.

Intaglio printing processes refer to printing methods and processes used in particular in the field of value documents. The intaglio printing process is known to be the most consistent and high-quality printing process for producing fine tapering lines and is therefore the printing technology of choice for fine design in the field of security documents, in particular banknotes and stamps. One of the distinguishing features of the intaglio printing process is that the thickness of the ink transferred to the substrate may be varied from a few micrometers to several tens of micrometers by using correspondingly shallow or deep engravings on the intaglio printing plate. The thickness of intaglio printed security features thus allows a relatively high amount of material on the substrate which can be useful for detection and sensing.

Oxidatively drying inks are commonly used for intaglio printing processes. These inks dry by oxidation in the presence of oxygen, in particular in the presence of the oxygen of the atmosphere. During the drying process, the oxygen combines with one or more components of the ink vehicle, converting the ink to a semi-solid or a solid state. The process may be accelerated by the use of driers also referred in the art as catalysts, siccative agents, desiccatives or desiccators, such as metallic salts, and/or by the application of a thermal treatment.

Oxidatively drying intaglio inks may suffer from a so-called "set-off" problem which is the transfer of ink from one printed sheet to the back side of the following printed sheet in the stack, or to the back of an endless sheet in a web. Although this problem may be encountered with any industrial printing process using oxidatively drying inks, the pronounced relief of intaglio printed patterns (i.e. thickness) may accentuate the problem of set-off. With state-of-the-art oxidatively drying intaglio inks, the set-off issue has been reduced mainly through optimization of the ink formulation.

There remains a need for bio-renewable intaglio printing processes using oxidatively drying intaglio inks comprising bio-renewable ingredients for producing security features exhibiting good drying performance and set-off characteristics.

## SUMMARY OF THE INVENTION

In a first aspect, the invention provides an oxidatively drying intaglio ink, comprising:

   (1) one or more oxidatively drying varnishes;
   (2) one or more driers;
   (3) one or more fillers and/or extenders; and
   (4) one or more waxes, wherein each wax independently has a melting point less than about 100°C and an acid value of greater than or equal to about 90 mg KOH/g, and is independently selected from:

       (i) a mixture of long-chain aliphatic carboxylic acids and long-chain aliphatic carboxylic acid esters; and
       (ii) long-chain aliphatic carboxylic acids.

In a second aspect, the invention provides a method of printing comprising the following steps:

   (A) applying the oxidatively drying intaglio ink of the invention to a surface bearing an engraving in the form of one or more indicia;
   (B) removing excess oxidatively drying intaglio ink of the invention;
   (C) applying the surface with pressure to a substrate to transfer the ink in the engravings to the substrate.

In a third aspect, the invention provides a method for making the oxidatively drying intaglio ink comprising mixing together:

   (1) the one or more oxidatively drying varnishes;

(2) the one or more driers;

(3) the one or more fillers and/or extenders; and

(4) the one or more waxes, wherein each wax independently has a melting point less than about 100°C and an acid value of greater than or equal to about 90 mg KOH/g, and is independently selected from:

(i) a mixture of long-chain aliphatic carboxylic acids and long-chain aliphatic carboxylic acid esters; and

(ii) long-chain aliphatic carboxylic acids.

In a fourth aspect, the invention provides a method for making the oxidatively drying intaglio ink, comprising the steps:

(i) providing a varnish paste comprising the one or more oxidatively drying varnishes, optionally the one or more fillers, and optionally one or more coloring agents;

(ii) providing a transparent white composition comprising the one or more waxes, wherein each wax independently has a melting point less than about 100°C and an acid value of greater than or equal to about 90 mg KOH/g, and is independently selected from:

(a) a mixture of long-chain aliphatic carboxylic acids and long-chain aliphatic carboxylic acid esters; and

(b) long-chain aliphatic carboxylic acids;

optionally one or more fillers, and optionally one or more coloring agents;

(iii) providing the one or more driers;

(iv) mixing the varnish paste, the transparent white and the one or more driers;

wherein at least one of the varnish paste and the transparent white composition comprises the one or more fillers and/or the one or more coloring agents.

In a fifth aspect, the invention provides a process for producing a security feature on a substrate by an intaglio printing process, said process comprising the steps:

A) inking an intaglio engraved printing plate with the oxidatively drying intaglio ink, said oxidatively drying intaglio ink comprising:

(1) the one or more oxidatively drying varnishes;

(2) the one or more driers;

(3) the one or more fillers; and

(4) the one or more waxes, wherein each wax independently has a melting point less than about 100°C and an acid value of greater than or equal to about 90 mg KOH/g, and is independently selected from:

(i) a mixture of long-chain aliphatic carboxylic acids and long-chain aliphatic carboxylic acid esters; and

(ii) long-chain aliphatic carboxylic acids;

B) removing excess oxidatively drying intaglio ink;

C) transferring the oxidatively drying intaglio ink in the form of the security feature on the substrate; and

D) drying the oxidatively drying intaglio ink in the presence of oxygen so as to form the security feature.

In a sixth aspect, the invention provides a security feature made by the process of the invention.

In a seventh aspect, the invention provides a security feature made using the oxidatively drying intaglio ink of the invention.

## DETAILED DESCRIPTION

### Definitions

The following definitions are to be used to interpret the meaning of the terms discussed in the description and recited in the claims.

As used herein, the indefinite article "a" indicates one as well as more than one and does not necessarily limit its referent noun to the singular.

As used herein, the term "at least one" is meant to define one or more than one, for example one or two or three.

As used herein, the term "at least n", wherein n is an integer, is meant to define n or more than n, for example n+1 or n+2 (i.e. in case of "at least one", it is meant one, two ,three, etc.; in case of "at least two", it is meant two, three, four, etc.)

As used herein, the term "about" means that the amount or value in question may be the specific value designated or some other value in its neighborhood. Generally, the term "about" denoting a certain value is intended to denote a range within ± 5% of the value. As one example, the phrase "about 100" denotes a range of 100 ± 5, i.e. the range from 95 to 105. Generally, when the term "about" is used, it can be expected that similar results or effects according to the invention can be obtained within a range of ±5% of the indicated value.

As used herein, the term "and/or" means that either all or only one of the elements of said group may be present. For example, "A and/or B" shall mean "only A, or only B, or both A and B". In the case of "only A", the term also covers the possibility that B is absent, i.e. "only A, but not B".

The term "comprising" as used herein is intended to be non-exclusive and open-ended. Thus, for instance a coating composition comprising a compound A may include other compounds besides A. However, the term "comprising" also covers, as a particular embodiment thereof, the more restrictive meanings of "consisting essentially of" and "consisting of", so that for instance "a fountain solution comprising A, B and optionally C" may also (essentially) consist of A and B, or (essentially) consist of A, B and C.

Where the present description refers to "preferred" embodiments/features, combinations of these "preferred" embodiments/features shall also be deemed as disclosed as long as this combination of "preferred" embodiments/features is technically meaningful.

The expression "melting point" shall mean the mid-point of a melting range, in the event the relevant material melts over a range of temperature.

The various features of the inks of the invention will be described in turn.

**One or more oxidatively drying varnishes**

The inks of the invention comprise one or more oxidatively drying varnishes. The term "varnish" is also referred to in the art as resin, binder or ink vehicle.

Preferred oxidatively drying varnishes are polymers comprising unsaturated fatty acid residues, saturated fatty acids residues or mixtures thereof, as generally known in the art. Preferably the oxidatively drying varnishes used in the inks of the invention comprise unsaturated fatty acid residues. Particularly preferred oxidatively drying varnishes are resins comprising unsaturated acid groups, even more preferred are resins comprising unsaturated carboxylic acid groups. However the resins may also comprise saturated fatty acids residues. Preferably the oxidatively drying varnishes used in the inks of the invention comprise acid groups, i.e. the oxidatively drying varnishes are selected from acid-modified resins. The oxidatively drying varnishes used in the inks of the invention may be selected from the group consisting of alkyd resins, vinyl polymers, polyurethane resins, polyesters, hyperbranched resins, rosin-modified maleic resins, rosin-modified phenol resins, rosin esters, petroleum resin-modified rosin esters, petroleum resin-modified alkyd resins, alkyd resin-modified rosin/phenol resins, alkyd resin-modified rosin esters, acrylic-modified rosin/phenol resins, acrylic-modified rosin esters, urethane-modified rosin/phenol resins, urethane-modified rosin esters, urethane-modified alkyd resins, epoxy-modified rosin/phenol resins, epoxy-modified alkyd resins, terpene resins, nitrocellulose resins, polyolefins, polyamides, acrylic resins and combinations or mixtures thereof. The expressions "polymer" and "resin" are used interchangeably herein.

Saturated and unsaturated fatty acid compounds are usually from animal or vegetable origin. Examples of animal sources include animal fat, butter fat, fish oil, lard, liver fats, tuna fish oil, sperm whale oil and/or tallow oil. Examples of plant sources include oils such as edible oils and/or non-edible oils. Examples of plant oils include without limitation bitter gourd, borage, calendula, canola, castor (that may be dehydrated in a separate step), China wood, coconut, conifer seed, corn, cottonseed, flaxseed, grape seed, *Jacaranda mimosifolia* seed, linseed oil, palm, palm kernel, peanut, pomegranate seed, rapeseed, safflower, snake gourd, soya (bean), sunflower, tall, tung and wheat germ. Suitable fatty acids obtained therefrom by chemical processes include, for example, myristoleic acid ($C_{14}H_{26}O_2$, CAS No 544-64-9), palmitoleic acid ($C_{16}H_{30}O_2$, CAS No 373-49-9), oleic acid ($C_{18}H_{34}O_2$, CAS No 112-80-1), $\alpha$-eleostearic acid ($C_{18}H_{30}O_2$, CAS No 506-23-0), licanic acid ($C_{18}H_{28}O_3$, CAS No 623-99-4), linoleic acid ($C_{18}H_{32}O_2$, CAS No 60-33-3), linolenic acid ($C_{18}H_{30}O_2$, CAS No 463-40-1), stearidonic acid ($C_{18}H_{28}O_2$, CAS No 20290-75-9), arachidonic acid ($C_{20}H_{32}O_2$, CAS No 506-32-1), ricinoleic acid ($C_{18}H_{34}O_3$, CAS No 141-22-0), erucic acid ($C_{22}H_{42}O_2$, CAS No 112-86-7), gadoleic acid ($C_{20}H_{38}O_2$, CAS No 29204-02-2), clupanodonic acid ($C_{22}H_{34}OO_2$, CAS No 24880-45-3), nisinic acid ($C_{24}H_{36}OO_2$, CAS No 68378-49-4) and mixtures thereof. Such fatty acids are typically used in the form of mixtures.

In one embodiment, the one or more oxidatively drying varnishes independently comprise a polyester, preferably a partially neutralized acidified polyester. In one embodiment, the one or more oxidatively drying varnishes independently comprise a partially neutralized acidified polyester which is a condensation product of conjugated fatty acids, one or more diacids and/or anhydrides, and one or more polyols.

In another embodiment, the one or more oxidatively drying varnishes independently comprise a partially neutralized acidified polyester that is a product of conjugated sunflower oil fatty acids, isophthalic acid, tetrahydrophthalic anhydride, trimethylolpropane and pentaerythritol.

In another embodiment, the one or more oxidatively drying varnishes independently comprise a partially neutralized acidified polyester that is a product of conjugated sunflower oil fatty acids, isophthalic acid, tetrahydrophthalic anhydride, trimethylolpropane, and pentaerythritol, neutralized with potassium hydroxide and dodecyl benzenesulfonic acid salt of 2-amino-propane, the weight percents being based on the total weight of the partially neutralized acidified polyester.

In another embodiment, the one or more oxidatively drying varnishes independently comprise an alkyd, preferably an alkyd that is a reaction product of triglycerides and/or fatty acids of vegetable origin, polyols, aliphatic or aromatic diacids and/or aliphatic or aromatic anhydrides and diisocyanates.

In another embodiment, the one or more oxidatively drying varnishes independently comprise a phenolic resin, preferably phenolic resin that is a phenolic modified rosin ester, cooked in an unsaturated oil, preferably tung oil.

In one embodiment, the one or more oxidatively drying varnishes independently comprise a mixture of a polyester, an alkyd and a phenolic resin.

In another embodiment, the one or more oxidatively drying varnishes independently comprise a mixture of a partially neutralized acidified polyester, an alkyd and a phenolic resin.

In another embodiment, the one or more oxidatively drying varnishes independently comprise a mixture of a partially neutralized acidified polyester which is a condensation product of conjugated fatty acids, one or more diacids and /or anhydrides, and one or more polyols, an alkyd and a phenolic resin.

In another embodiment, the one or more oxidatively drying varnishes independently comprise a mixture of a partially neutralized acidified polyester that is a product of conjugated sunflower oil fatty acids, isophthalic acid, tetrahydrophthalic anhydride, trimethylolpropane and pentaerythritol, an alkyd and a phenolic resin.

In another embodiment, the one or more oxidatively drying varnishes independently comprise a mixture of a partially neutralized acidified polyester, an alkyd that is a reaction product of triglycerides and/or fatty acids of vegetable origin, polyols, aliphatic or aromatic diacids and/or aliphatic or aromatic anhydrides and diisocyanates and a phenolic resin.

In another embodiment, the one or more oxidatively drying varnishes independently comprise a mixture of a partially neutralized acidified polyester which is a condensation product of conjugated fatty acids, one or more diacids and/or anhydrides, and one or more polyols, an alkyd that is a reaction product of triglycerides and/or fatty acids of vegetable origin, polyols, aliphatic or aromatic diacids and/or aliphatic or aromatic anhydrides and diisocyanates and a phenolic resin.

In another embodiment, the one or more oxidatively drying varnishes independently comprise a mixture of a partially neutralized acidified polyester that is a product of conjugated sunflower oil fatty acids, isophthalic acid, tetrahydrophthalic anhydride, trimethylolpropane and pentaerythritol, an alkyd that is a reaction product of triglycerides and/or fatty acids of vegetable origin, polyols, aliphatic or aromatic diacids and/or aliphatic or aromatic anhydrides and diisocyanates and a phenolic resin.

In another embodiment, the one or more oxidatively drying varnishes independently comprises an alkyd, preferably an alkyd that is a reaction product of triglycerides and/or fatty acids of vegetable origin, polyols, aliphatic or aromatic diacids and/or aliphatic or aromatic anhydrides and diisocyanates, and a phenolic resin, preferably a phenolic resin that is a phenolic modified rosin ester, cooked in an unsaturated oil, preferably tung oil.

The one or more oxidatively drying varnishes are preferably present in the oxidatively drying intaglio inks of the invention in a total amount from at or about 10 to at or about 80 wt%, more preferably at or about 20 to at or about 60 wt%, when the ink does not comprise coloring agents, and from at or about 5 to at or about 60 wt%, more preferably from at or about 10 to at or about 50 wt% when the ink comprises coloring agents, the weight percents being based on the total weight of the oxidatively drying intaglio ink.

**One or more driers**

The inks of the invention comprise one or more driers. Oxidatively drying inks dry by oxidation in the presence of oxygen, in particular in the presence of the oxygen in the atmosphere. During the drying process, the oxygen combines with one or more components of the ink, setting off a chain of reactions that convert the ink to a solid state. The inks of the invention comprise one or more driers (also referred as catalysts, siccatives and siccative agents) to speed up the oxidation process. Examples of driers include inorganic or organic salts of metal(s), metallic soaps of organic acids, metal complexes and metal complex salts. Suitable salts of metal(s) include salts containing cobalt, calcium, copper, zinc, iron, zirconium, manganese, barium, zinc, strontium, lithium, vanadium and potassium as the cation(s); and halides, nitrates, sulphates, carboxylates like acetates, ethylhexanoates, neodecanoates, octanoates and naphthenates or acetoacetonates as the anion(s) such as for example ethylhexanoates or neodecanoates of cobalt, manganese and zirconium. Suitable examples of metal complexes and metal complex salts include manganese, vanadium and iron compounds (i.e.

manganese complexes, manganese complex salts, vanadium complexes, vanadium complex salts, iron complexes and iron complex salts).

In one embodiment, the inks of the invention comprise two or more driers , wherein at least one of said two or more driers is a manganese (Mn) salt and another drier is a cobalt (Co) salt, particularly blends of one or more carboxylate salts of manganese (Mn) and one or more carboxylate salts of cobalt (Co), more particularly blends of a 2-ethylhexanoate salt of manganese (Mn) and a 2-ethylhexanoate salt cobalt (Co).

In another embodiment, the inks of the invention comprise three or more driers wherein at least one of said three or more driers is a manganese (Mn) salt, another one is a cobalt (Co) salt and another one is a zirconium (Zr) salt, particularly blends of one or more carboxylate salts of manganese (Mn), one or more carboxylate salts of cobalt (Co) and one or more carboxylate salts of zirconium (Zr), more particularly blends of a 2-ethylhexanoate salt of manganese (Mn), 2-ethylhexanoate salt of cobalt (Co) and a 2-ethylhexanoate salt of zirconium (Zr).

Advantageously, cobalt-free (Co-free) driers are used.

Advantageously, 2-ethylhexanoate-free driers are used.

Advantageously, cobalt-free (Co-free) and 2-ethylhexanoate-free driers are used.

In another embodiment, the inks of the invention comprise three or more driers wherein at least one of said three or more driers is a manganese (Mn) salt, another one is a zirconium (Zr) salt and another one is an iron (Fe) salt, particularly a blend of one or more carboxylate salts of manganese (Mn), one or more carboxylate salts of zirconium (Zr) and one or more complexes of iron (Fe), more particularly blends of a neodecanoate salt of manganese (Mn), a neodecanoate salt of zirconium (Zr) and a complex of iron (Fe).

In another preferred embodiment, at least one of the one or more driers is chloro[rel-1,5-dimethyl (1$R$,2$S$,4$R$,5$S$)-9,9-dihydroxy-3-methyl-2,4-di(2-pyridinyl-$^{K_j}$ $N$)-7-[(2-pyridinyl-$^{K_j}$ $N$)methyl]-3,7-diazabicyclo[3.3.1]nonane-1,5-dicarboxylate- $^{-K_i}$ $N^3$,$^{K_j}$ $N^7$]-iron (1+) chloride (1:1) (CAS 478945-46-9) sold by Borchers as Borchi® OXY-Coat 1410, in particular together with manganese (Mn) and/or zirconium (Zr) salts, in particular manganese (Mn) neodecanoates and zirconium (Zr) neodecanoates.

The one or more driers used in the inks of the invention are preferably present in a total amount from at or about 0.01 wt% to at or about 10 wt%, more preferably in a total amount from at or about 0.1 wt% to at or about 5 wt%, the weight percents being based on the total weight of the oxidatively drying intaglio ink.

## One or more fillers and/or extenders

The oxidatively drying intaglio inks of the invention comprise one or more fillers and/or extenders preferably selected from the group consisting of talcs, limestones, micas (e.g. muscovites), montmorillonites, bentonites, wollastonites, halloysites, calcined clays, China clays, carbonates (e.g. calcium carbonate, magnesium carbonate), barium sulphate, silicates (e.g. magnesium silicate, aluminum silicate), vermiculites, amorphous silica (e.g. fumed silica, precipitated silica, silica flour), wood flours (sawdust), natural fibers, synthetic fibers (such as carbon fibers or carbon nanotubes) and mixtures thereof, preferably selected from the group consisting of talcs, micas, wollastonites, calcined clays, carbonates, amorphous silica and mixtures thereof.

In one embodiment, at least one of the one or more fillers and/or extenders is calcium carbonate.

In another embodiment, at least one of the one or more fillers and/or extenders is talc.

In another embodiment, at least one of the one or more fillers and/or extenders is calcium carbonate and at least another one of the one or more fillers is talc.

The one or more fillers and/or extenders are preferably present in a total amount from at or about 10 wt% to about 60 wt%, more preferably from at or about 25 wt% to at or about 55 wt%, even more preferably from at or about 30 wt% to at or about 50 wt%, the weight percents being based on the total weight of the oxidatively drying intaglio ink.

In a preferred embodiment, the ink of the invention comprises talc and calcium carbonate, preferably from at or about 1 to at or about 5 wt% of talc, more preferably about 2.5 wt% of talc, and preferably from at or about 20 to at or about 50 wt% of calcium carbonate, more preferably about 37 wt% of calcium carbonate, the weight percentages being based on the total weight of the oxidatively drying intaglio ink.

## One or more waxes

The inks of the invention comprise one or more waxes, wherein each wax independently has a melting point less than about 100°C and an acid value of greater than or equal to about 90 mg KOH/g, and is independently selected from:

   (i) a mixture of long-chain aliphatic carboxylic acids and long-chain aliphatic carboxylic acid esters; and
   (ii) long-chain aliphatic carboxylic acids.

The acid value is measured according to ASTM D1386-98. The melting point is typically measured using a DSC131 Evo (Setaram), by heating the sample from 10°C to 120°C at 10°C /min under nitrogen.

In one embodiment, the one or more waxes independently have a melting point of less than about 95°C, preferably less than about 90°C. In another embodiment, the one or more waxes independently have a melting point greater than about 45°C, preferably greater than about 60°C, more preferably greater than about 70°C. The one or more waxes preferably independently have a melting point between about 50 to about 100°C, more preferably between about 60 and about 90°C, more particularly preferably between about 70 and about 86°C.

Preferably, the one or more waxes independently have an acid value greater than or equal to about 100 mg KOH/g, more preferably greater than or equal to about 110 mg KOH/g, more particularly preferably greater than or equal to about 115 mg KOH/g. In one embodiment, the one or more waxes independently have an acid value of from about 90 to about 200 mg KOH/g, preferably about 100 to about 175 mg KOH/g, more preferably about 110 to about 150 mg KOH/g.

In one embodiment, at least one of the one or more waxes is selected from those comprising $C_{12}$-$C_{36}$-carboxylic acids, preferably from those comprising $C_{14}$-$C_{32}$-carboxylic acids.

In another embodiment, at least one of the one or more waxes is selected from those comprising $C_{12}$-$C_{36}$-carboxylic acids and esters of $C_{12}$-$C_{36}$-carboxylic acids, more preferably from those comprising $C_{14}$-$C_{32}$-carboxylic acids and esters of $C_{14}$-$C_{32}$-carboxylic acids. The alcohol component of the esters is preferably selected from $C_1$-$C_{36}$-alcohols, more preferably $C_{12}$-$C_{30}$-alcohols.

In one embodiment, at least one of the one or more waxes is selected from those having an acid value of from about 110 to about 200 mg KOH/g, preferably about 115 to about 175 mg KOH/g, more preferably about 118 to about 150 mg KOH/g, and comprising $C_{12}$-$C_{36}$-carboxylic acids and esters of $C_{12}$-$C_{36}$-carboxylic acids, more preferably from those comprising $C_{14}$-$C_{32}$-carboxylic acids and esters of $C_{14}$-$C_{32}$-carboxylic acids.

In another embodiment, at least one of the one or more waxes is selected from those having an acid value of from about 110 to about 200 mg KOH/g, preferably about 115 to about 175 mg KOH/g, more preferably about 118 to about 150 mg KOH/g, and comprising $C_{12}$-$C_{36}$-carboxylic acids and esters of $C_{12}$-$C_{36}$-carboxylic acids, more preferably from those comprising $C_{14}$-$C_{32}$-carboxylic acids and esters of $C_{14}$-$C_{32}$-carboxylic acids, wherein the alcohol component of the esters is selected from $C_1$-$C_{36}$-alcohols, preferably $C_{12}$-$C_{30}$-alcohols.

In a preferred embodiment, the one or more waxes are selected from those of vegetable origin (i.e. bio-renewable). This has the benefit of improving the environmental footprint of the ink of the invention.

The one or more waxes are preferably present in the ink of the invention at a total amount of from at or about 2 to at or about 10 wt%, more preferably from at or about 3 to at or about 7 wt%, particularly preferably at or about 4 to at or about 6 wt%, the weigh percentages being based on the total weight of the oxidatively drying intaglio ink.

**Coloring agents**

The oxidatively drying intaglio inks of the invention may be white or colored inks allowing the preparation of white or colored security features. According to one embodiment, the oxidatively drying intaglio inks of the invention are white inks. According to one embodiment, the oxidatively drying intaglio inks of the invention are transparent inks. According to one embodiment, the oxidatively drying intaglio inks of the invention are colored inks.

The oxidatively drying intaglio inks of the invention optionally comprise one or more coloring agents. The coloring agents may be color constant or they may be optically variable, i.e. they may be selected from optically variable pigments, color constant pigments, color constant dyes and mixtures thereof, preferably selected from color constant organic pigments, color constant inorganic pigments and mixtures thereof.

In a preferred embodiment, the oxidatively drying intaglio inks of the invention are color constant inks and may be white or colored inks. According to one embodiment, the oxidatively drying intaglio inks of the invention are color constant white inks. According to one embodiment, the oxidatively drying intaglio inks of the invention are color constant composition inks preferably comprising a) one or more dyes, and/or b) inorganic pigments, organic pigments or mixtures thereof. Dyes suitable for inks are known in the art and are preferably selected from the group comprising reactive dyes, direct dyes, anionic dyes, cationic dyes, acid dyes, basic dyes, food dyes, metal-complex dyes, solvent dyes and mixtures thereof. Typical examples of suitable dyes include without limitation coumarines, cyanines, oxazines, uranines, phtalocyanines, indolinocyanines, triphenylmethanes, naphtalocyanines, indonanaphtalo-metal dyes, anthraquinones, anthrapyridones, azo dyes, rhodamines, squarilium dyes, croconium dyes. Typical examples of dyes suitable for the present invention include without limitation C.I. Acid Yellow 1, 3, 5, 7, 11, 17, 19, 23, 25, 29, 36, 38, 40, 42, 44, 49, 54, 59, 61, 70, 72, 73, 75, 76, 78, 79, 98, 99, 110, 111, 121, 127, 131, 135, 142, 157, 162, 164, 165, 194, 204, 236, 245; C.I. Direct Yellow 1, 8, 11, 12, 24, 26, 27, 33, 39, 44, 50, 58, 85, 86, 87, 88, 89, 98, 106, 107, 110, 132, 142, 144; C.I. Basic Yellow 13, 28, 65; C.I. Reactive Yellow 1, 2, 3, 4, 6, 7, 11, 12, 13, 14, 15, 16, 17, 18, 22, 23, 24, 25, 26, 27, 37, 42; C.I. Food Yellow 3, 4; C.I. Acid Orange 1, 3, 7, 10, 20, 76, 142, 144; C.I. Basic Orange 1, 2, 59; C.I. Food Orange 2; C.I. Orange B; C.I. Acid Red 1, 4, 6, 8, 9, 13, 14, 18, 26, 27, 32, 35, 37, 42, 51, 52, 57, 73, 75, 77, 80, 82, 85, 87, 88, 89, 92, 94, 97, 106, 111, 114, 115, 117, 118, 119, 129, 130, 131, 133, 134, 138, 143, 145, 154, 155, 158, 168, 180, 183, 184, 186, 194, 198, 209, 211, 215, 219, 221, 249, 252, 254, 262, 265, 274, 282, 289, 303, 317, 320, 321, 322, 357, 359; C.I. Basic Red 1, 2, 14, 28; C.I. Direct Red 1, 2, 4, 9, 11, 13, 17, 20, 23, 24, 28, 31, 33, 37, 39, 44, 46, 62, 63, 75, 79, 80, 81, 83, 84, 89, 95, 99, 113, 197, 201, 218, 220, 224, 225, 226, 227, 228, 229, 230, 231, 253; C.I. Reactive Red 1, 2, 3, 4, 5, 6, 7, 8, 11, 12, 13, 15, 16, 17, 19, 20, 21, 22, 23, 24, 28, 29, 31, 32, 33, 34, 35, 36, 37, 38, 39, 40, 41, 42, 43, 45, 46, 49, 50, 58, 59, 63, 64, 108, 180; C.I. Food Red 1, 7, 9, 14; C.I. Acid Blue 1, 7, 9, 15, 20, 22, 23, 25, 27, 29, 40, 41, 43, 45, 54, 59, 60, 62, 72, 74, 78, 80, 82, 83, 90, 92, 93, 100, 102, 103, 104, 112, 113, 117, 120, 126, 127, 129, 130, 131, 138, 140, 142, 143, 151, 154, 158, 161, 166, 167, 168, 170, 171, 182, 183, 184, 187, 192, 193, 199, 203, 204, 205, 229, 234, 236, 249, 254, 285; C.I. Basic Blue 1, 3, 5, 7, 8, 9, 11, 55, 81; C.I. Direct Blue 1, 2, 6, 15, 22, 25, 41, 71, 76, 77, 78, 80, 86, 87, 90, 98, 106, 108, 120, 123, 158, 160, 163, 165, 168, 192, 193, 194, 195, 196, 199, 200, 201, 202, 203, 207, 225, 226, 236, 237, 246, 248, 249; C.I. Reactive Blue 1, 2, 3, 4, 5, 7, 8, 9, 13, 14, 15, 17, 18, 19, 20, 21, 25, 26, 27, 28, 29, 31, 32, 33, 34, 37, 38, 39, 40, 41, 43, 44, 46, 77; C.I. Food Blue 1, 2; C.I. Acid Green 1, 3, 5, 16, 26, 104; C.I. Basic Green 1, 4; C.I: Food Green 3; C.I. Acid Violet 9, 17, 90, 102, 121; C.I. Basic Violet 2, 3, 10, 11, 21; C.I. Acid Brown 101, 103, 165, 266, 268, 355, 357, 365, 384; C.I. Basic Brown 1; C.I. Acid Black 1, 2, 7, 24, 26, 29, 31, 48, 50, 51, 52, 58, 60, 62, 63, 64, 67, 72, 76, 77, 94, 107, 108, 109, 110, 112, 115, 118, 119, 121, 122, 131, 132, 139, 140, 155, 156, 157, 158, 159, 191, 194; C.I. Direct Black 17, 19, 22, 32, 39, 51, 56, 62, 71, 74, 77, 94, 105, 106, 107, 108, 112, 113, 117, 118, 132, 133, 146, 154, 168; C.I. Reactive Black 1, 3, 4, 5, 6, 8, 9, 10, 12, 13, 14, 18, 31; C.I. Food Black 2; C.I. Solvent Yellow 19, C.I. Solvent Orange 45, C.I. Solvent Red 8, C.I. Solvent Green 7, C.I. Solvent Blue 7, C.I. Solvent Black 7; C.I. Disperse Yellow 3, C.I. Disperse Red 4, 60, C.I. Disperse Blue 3, and metal azo dyes disclosed in US 5,074,914, US 5,997,622, US 6,001,161, JP 02-080470, JP 62-190272, JP 63-218766. Suitable dyes for the present invention may be infrared absorbing dyes or luminescent dyes. When present, the one or more dyes used in the oxidatively drying intaglio ink of the invention are preferably present in a total amount from about 1 wt%, to about 20 wt%, the weight percents being based on the total weight of the oxidatively drying intaglio ink.

Typical examples of organic and inorganic pigments include without limitation carbon black, C.I. Pigment Yellow 12, C.I. Pigment Yellow 42, C.I. Pigment Yellow 93, C.I. Pigment 109, C.I. Pigment Yellow 110, C.I. Pigment Yellow 147, C.I. Pigment Yellow 173, C.I. Pigment Orange 34, C.I. Pigment Orange 48, C.I. Pigment Orange 49, C.I. Pigment Orange 61, C.I. Pigment Orange 71, C.I. Pigment Orange 73, C.I. Pigment Red 9, C.I. Pigment Red 22, C.I. Pigment Red 23, C.I. Pigment Red 67, C.I. Pigment Red 122, C.I. Pigment Red 144, C.I. Pigment Red 146, C.I. Pigment Red 170, C.I. Pigment Red 177, C.I. Pigment Red 179, C.I. Pigment Red 185, C.I. Pigment Red 202, C.I. Pigment Red 224, C.I. Pigment Brown 6, C.I. Pigment Brown 7, C.I. Pigment Red 242, C.I. Pigment Red 254, C.I. Pigment Red 264, C.I. Pigment Brown 23, C.I. Pigment Blue 15, C.I. Pigment Blue 15:3, C.I. Pigment Blue 60, C.I. Pigment Violet 19, C.I. Pigment Violet 23, C.I. Pigment Violet 32, C.I. Pigment Violet 37, C.I. Pigment Green 7, C.I. Pigment Green 36, C.I. Pigment Black 7, C.I. Pigment Black 11, Pigment Black 31, Pigment Black 32, C. I. Pigment White 4, C.I Pigment White 6, C.I. Pigment White 7, C. I. Pigment White 22, CROMOPHTAL VIOLET S 5800 (CAS No 215247-95-3), Pigment white 6 (CAS No 13463-67-7), antimony yellow, lead chromate, lead chromate sulfate, lead molybdate, ultramarine blue, cobalt blue, manganese blue, chrome oxide green, hydrated chrome oxide green, cobalt green, cerium sulfide, cadmium sulfide, cadmium sulfoselenides, zinc ferrite, bismuth vanadate, Prussian blue, mixed metal oxides, azo, azomethine, methine, anthraquinone, phthalocyanine, perinone, perylene, diketopyrrolopyrrole, thioindigo, thiazinindigo, dioxazine, iminoisoindoline, iminoisoindolinone, quinacridone, flavanthrone, indanthrone, anthrapyrimidine and quinophthalone coloring agents. When present, the inorganic pigments and/or dyes, organic pigments and/or dyes or mixtures thereof described herein are preferably present in a total amount from at or about 0.1 wt% to at or about 45 wt%, the weight percents being based on the total weight of the oxidatively drying intaglio ink.

For embodiments wherein the oxidatively drying intaglio inks of the invention are transparent inks, said inks typically do not comprise any dyes or pigments such as those described herein. For embodiments wherein the oxidatively drying intaglio inks of the invention are white, said inks comprise one or more pigments preferably selected from the group consisting of C.I. Pigment White 4, C.I Pigment White 6, C.I. Pigment White 7 and C. I. Pigment White 22.

According to one embodiment of the present invention, the oxidatively drying intaglio inks of the invention are optically variable inks and comprise optically variable pigments or a mixture of different optically variable pigments. Optically variable inks may further comprise one or more color constant pigments. Optically variable inks preferably comprise optically variable pigments or a mixture of different optically variable pigments, wherein the optically variable pigments are preferably selected from the group consisting of thin film interference pigments, interference coated pigments, cholesteric liquid crystal pigments and mixtures thereof. When present, the optically variable pigments are preferably comprised in the oxidatively drying intaglio ink of the invention in a total amount between about 5 wt% and about 40 wt% and more preferably in a total amount between about 10 wt% and about 35 wt%, the weight percents being based on the total weight of the oxidatively drying intaglio ink. Suitable thin film interference pigments exhibiting optically variable characteristics are known to those skilled in the art and disclosed in US 4,705,300; US 4,705,356; US 4,721,271; US 5,084,351; US 5,214,530; US 5,281,480; US 5,383,995; US 5,569,535, and US 5,571624. When at least a part of the optically variable pigments consists of thin film interference pigments, it is preferred that the thin film interference pigments comprise a Fabry-Perot reflector/dielectric/absorber multilayer structure and more preferably a Fabry-Perot absorber/-dielectric/reflector/dielectric/absorber multilayer structure, wherein the absorber layers are partially transmitting and partially reflecting, the dielectric layers are transmitting and the reflective layer is reflecting the incoming light. Preferably, the reflector layer is selected from the group consisting of metals, metal alloys and combinations thereof, preferably selected from the group consisting of reflective metals, reflective metal alloys and combinations thereof and more preferably selected from the group consisting of aluminum (Al), chromium (Cr), nickel (Ni), and mixtures thereof and still more preferably aluminum (Al). Preferably, the dielectric layers are independently selected from the group consisting of magnesium fluoride ($MgF_2$), silicium dioxide ($SiO_2$) and mixtures thereof and more preferably magnesium fluoride ($MgF_2$). Preferably, the absorber layers are independently selected from the group consisting of chromium (Cr), nickel (Ni), metallic alloys and mixtures thereof and more preferably chromium (Cr). When at least a part of the optically variable pigments consists of thin film interference pigments, it is particularly preferred that the thin film interference pigments comprise a Fabry-Perot absorber/dielectric/reflector/dielectric/absorber multilayer structure consisting of a $Cr/MgF_2/Al/MgF_2/Cr$ multilayer structure.

Thin film interference pigments described herein are typically manufactured by vacuum deposition of the different required layers onto a web. After deposition of the desired number of layers, the stack of layers is removed from the web, either by dissolving a release layer in a suitable solvent, or by stripping the material from the web. The so-obtained material is then broken down to flakes which have to be further processed by grinding, milling or any suitable method. The resulting product consists of flat flakes with broken edges, irregular shapes and different aspect ratios.

Suitable interference coated pigments include without limitation structures consisting of a substrate selected from the group consisting of metallic cores such as titanium, silver, aluminum, copper, chromium, iron, germanium, molybdenum, tantalum or nickel coated with one or more layers made of metal oxides as well as structure consisting of a core made of synthetic or natural micas, other layered silicates (e.g. talc, kaolin and sericite), glasses (e.g. borosilicates), silicium dioxides ($SiO_2$), aluminum oxides ($Al_2O_3$), aluminum oxides/hydroxides (boehmite), titanium oxides ($TiO_2$), graphites and mixtures thereof coated with one or more layers made of metal oxides (e.g. titanium oxide, zirconium oxide, tin oxide, chromium oxide, nickel oxide, copper oxide, iron oxide and iron oxide/hydroxide). The structures described hereabove have been described for example in Chem. Rev. 99 (1999), G. Pfaff and P. Reynders, pages 1963-1981 and WO2008/083894A2. Typical examples of these interference coated pigments include without limitation silicium oxide cores coated with one or more layers made of titanium oxide, tin oxide and/or iron oxide; natural or synthetic mica cores coated with one or more layers made of titanium oxide, silicium oxide and/or iron oxide, in particular mica cores coated with alternate layers made of silicium oxide and titanium oxide; borosilicate cores coated with one or more layers made of titanium oxide, silicium oxide and/or tin oxide; and titanium oxide cores coated with one or more layers made of iron oxide, iron oxide/hydroxide, chromium oxide, copper oxide, cerium oxide, aluminum oxide, silicium oxide, bismuth vanadate, nickel titanate, cobalt titanate and/or antimony-doped, fluorine-doped or indium-doped tin oxide; aluminum oxide cores coated with one or more layers made of titanium oxide and/or iron oxide.

Liquid crystals in the cholesteric phase exhibit a molecular order in the form of a helical superstructure perpendicular to the longitudinal axes of its molecules. The helical superstructure is at the origin of a periodic refractive index modulation throughout the liquid crystal material, which in turn results in a selective transmission / reflection of determined wavelengths of light (interference filter effect). Cholesteric liquid crystal polymers can be obtained by subjecting one or more cross-linkable substances (nematic compounds) with a chiral phase to alignment and orientation. The particular situation of the helical molecular arrangement leads to cholesteric liquid crystal materials exhibiting the property of reflecting a circularly polarized light component within a determined wavelength range. The pitch can be tuned in particular by varying selectable factors including the temperature and solvents concentration, by changing the nature of the chiral component(s) and the ratio of nematic and chiral compounds. Crosslinking under the influence of UV radiation freezes the pitch in a predetermined state by fixing the desired helical form so that the color of the resulting cholesteric liquid crystal materials is no longer depending on external factors such as the temperature. Cholesteric liquid crystal materials may then be shaped to cholesteric liquid crystal pigments by subsequently comminuting the polymer to the desired particle size. Examples of films and pigments made from cholesteric liquid crystal materials and their preparation are disclosed in US 5,211,877; US 5,362,315 and US 6,423,246 and in EP 1 213 338 A1; EP 1 046 692 A1 and EP 0 601 483 A1, the respective disclosure of which is incorporated by reference herein.

When present, the optically variable pigments used in the oxidatively drying intaglio ink of the invention are preferably present in a total amount from at about 1 to at or about 20 wt%, more preferably from at about 2 to at or about 12 wt%, more particularly preferably from at or about 6 to about 10 wt%, the weight percentages being based on the total weight of the oxidatively drying intaglio ink.

**One or more solvents**

The oxidatively drying intaglio inks of the invention may optionally comprise one or more solvents. Such solvents may be of vegetable or mineral origin. Preferably the solvent should have a boiling point at 760 mm Hg of more than 140°C, more preferably more than 160°C, particularly preferably more than 180°C. Preferably the solvent has a boiling point at 760 mm Hg of less than 350°C.

Mineral solvents are usually derived from petroleum and preferred examples include without limitation low aromatic or non-aromatic linear or branched hydrocarbons preferably having a boiling point at 760 mm Hg of more than 140°C, preferably more than 160°C, and even more preferably more than 180°C. Preferably, the low aromatic or non-aromatic hydrocarbon solvents are linear alkanes having more than 10 carbon atoms, for example mineral oil, more preferable n-undecane.

Examples of solvents of vegetable origin include high-boiling point esters obtained from the condensation of saturated or unsaturated linear fatty acids, comprising between 10 and 18 carbon atoms obtained from e.g. soybean oil, coconut oil, palm oil, olive oil, linseed oil, cottonseed oil, safflower oil, sunflower oil, tung oil, tar oil, rapeseed oil, dehydrated castor oil, sesame oil and the like, and a linear or branched monoalcohol bearing between 1 and 8 carbon atoms. Such fatty acids esters are liquid at room temperature and preferably have a boiling point at 760 mmHg of more than 140°C, more preferably more than 160°C, and even more preferably more than 180°C. Due to their biodegradable nature, low VOC and low toxicology profile (in particular to aquatic ecosystems), fatty acid methyl esters such as rapeseed oil methyl esters (CAS 85586-25-0, b.p. >150°C), linseed oil methyl esters (CAS 01051-16-0, b.p. >150°C), sunflower oil methyl esters (CAS 68919-54-0, b.p. >150°C), safflower oil methyl esters (CAS 68938-50-1, b.p. >150°C) and the like are particularly preferred.

When present, the one or more solvents are present in the oxidatively drying intaglio ink of the invention in a total amount preferably from at or about 1 wt% to at or about 25 wt%, preferably from at or about 2 wt% to at or about 20 wt%, and more preferably from at or about 5 wt% to at or about 18 wt%, the weight percentages being based on the total weight of the oxidatively drying intaglio ink.

In one embodiment, the ink of the invention comprises propane-1,2-diol and/or mineral oil and/or oil of vegetable origin as solvents.

In another embodiment, the ink of the invention comprises one or more solvents selected from methyl esters of $C_{12}$-$C_{36}$-carboxylic acids, preferably methyl esters of $C_{14}$-$C_{32}$-carboxylic acids.

In another embodiment, the ink of the invention comprises at least one solvent that is of vegetable origin, in particular, methyl esters of $C_{12}$-$C_{36}$-carboxylic acids of vegetable origin, preferably methyl esters of $C_{14}$-$C_{32}$-carboxylic acids of vegetable origin.

**Other ingredients**

The oxidatively drying inks of the invention may additionally comprise one or more other waxes ("additional waxes"), in addition to the one or more waxes having a melting point less than about 100°C and an acid value of greater than or equal to about 90 mg KOH/g, such additional waxes being, for example, selected from those having melting points above 100°C, for example polyethylene-based waxes. The additional wax preferably has a melting point of greater than 100°C. The additional wax preferably has a melting point of less than 200°C. When present, the additional waxes are preferably used at about 0.5 to about 3 wt%, more preferably at about 0.75 to about 2 wt%, the weight percentages being based on the total weight of the oxidatively drying intaglio ink. Melting points of waxes having melting points above 100°C can be measured, for example, using a DSC131 Evo (Setaram) by heating the sample from 15°C to about 200°C at 5°C /min under an inert atmosphere, such as nitrogen.

The oxidatively drying intaglio inks of the invention may further comprise one or more surfactants, in particular hydrophilic macromolecular surfactants such as those described e.g. in EP 0 340 163 B1. The role of the optional surfactants is to help wiping off the excess of ink present on the printing cylinder just before contacting said printing cylinder with the substrate. This process of wiping off the excess of ink is part of any high-speed industrial intaglio printing process and is carried out using a tissue or a paper roll ("calico") or a polymer wiping cylinder and a cleansing water-based solution ("wiping solution"). In this case, the optional surfactants are used to emulsify the excess of ink in the cleansing solution. Said surfactants may be nonionic, anionic or cationic as well as zwitterionic ones. In the case of hydrophilic macromolecular surfactants, the functional groups are for example carboxylic or sulfonic acid groups, hydroxyl groups, ether groups or primary, secondary, tertiary or quaternary amino groups. The acid groups may be neutralized with amines, alcanolamines or preferably inorganic bases, or combinations thereof. Primary, secondary and tertiary amino groups may be neutralized with inorganic or organic acids such as sulfonic acids, formic acid, acetic acid, trifluoroacetic acid and others. Particularly preferred are anionic macromolecular surfactants (AMS), such as those described in EP 2 014 729 A1.

**Viscosity**

Preferably the oxidatively drying intaglio ink of the invention has a viscosity in the range of about 3 to about 60 Pa s at 40°C and 1,000 s$^{-1}$, more preferably about 3 to about 16 Pa s, particularly preferably about 3 to about 13 Pa s, when measured using a Haake Roto Visco RV1 rotational rheometer, using a cone plate of 20 mm diameter and a 0.5° geometry.

**Method of manufacture**

The inks of the invention are made by mixing the various ingredients. In one embodiment, the one or more oxidatively drying varnishes, the one or more driers, the one or more fillers and/or extenders, and the one or more waxes, wherein each wax independently has a melting point less than about 100°C and an acid value of greater than or equal to about 90 mg KOH/g, and is independently selected from:

(i) a mixture of long-chain aliphatic carboxylic acids and long-chain aliphatic carboxylic acid esters; and
(ii) long-chain aliphatic carboxylic acids;

are mixed together, for example using a Dual Asymmetric Centrifuge mixture, for example for 3 minutes at 2,500 rpm, and/or by grinding, for example on a three-roll mill in three passes with pressures of, for example, 5, 11 and 16 bars.

In another embodiment, three separate mixtures are made:

1. a varnish paste, which comprises the one or more oxidatively drying varnishes, and optionally the one or more fillers, and optionally the one or more coloring agents;
2. a transparent white composition comprising the one or more waxes, wherein each wax independently has a melting point less than about 100°C and an acid value of greater than or equal to about 90 mg KOH/g, and is independently selected from:

(i) a mixture of long-chain aliphatic carboxylic acids and long-chain aliphatic carboxylic acid esters; and
(ii) long-chain aliphatic carboxylic acids;

optionally the one or more fillers and/or extenders, and optionally the one or more coloring agents;
3. the one or more driers;

wherein at least one of the varnish paste and the transparent white composition comprises the one or more fillers and/or extenders and/or the one or more coloring agents. The three mixtures are mixed to produce the ink of the invention.

In one embodiment, the varnish paste comprises an oxidatively drying varnish comprising the mixture of a partially neutralized acidified polyester, an alkyd and a phenolic resin described herein. In another embodiment, the varnish paste comprises the partially neutralized acidified polyester, an alkyd and a phenolic resin described herein.

In another embodiment, the varnish paste comprises the oxidative varnish comprising an alkyd, preferably an alkyd that is a reaction product of triglycerides and/or fatty acids of vegetable origin, polyols, aliphatic or aromatic diacids and/or aliphatic or aromatic anhydrides and diisocyanates, and a phenolic resin described herein, preferably a phenolic resin that is a phenolic modified rosin ester, cooked in an unsaturated oil, preferably tung oil.

In another embodiment, the varnish paste comprises from at or about 30 to at or about 60 wt% of the oxidatively drying varnish described herein, preferably about 40 to at or about 55 wt% oxidatively drying varnish, the weight percentages being based on the total weight of the varnish paste.

In another embodiment, the varnish paste comprises from at or about 5 to at or about 30 wt%, preferably from at or about 10 to at or about 25 wt% of the one or more coloring agents described herein, the weight percentages being based on the total weight of the varnish paste.

In another embodiment, the varnish paste comprises the one of more fillers and/or extenders described herein, preferably talc and calcium carbonate.

In another embodiment, the varnish paste comprises from at or about 20 to at or about 40 wt% of the one or more fillers and/or extenders described herein, preferably from at or about 25 to at or about 35 wt% of the one or more fillers and/or extenders, the weight percentages being based on the total weight of the varnish paste.

In one embodiment, the varnish paste comprises from at or about 30 to at or about 60 wt% of the oxidatively drying varnish described herein, preferably from at or about 40 to at or about 55 wt% of the oxidatively drying varnish, from at or about 5 to at or about 30 wt%, preferably from at or about 10 to at or about 25 wt% of the one or more coloring agents, and from at or about 20 to at or about 40 wt% of the one mor fillers and/or extenders, preferably about 25 to about 35 wt% of the one or more fillers and/or extenders, the weight percentages being based on the total weight of the varnish paste.

The transparent white composition comprises the one or more waxes, wherein each wax independently has a melting point less than about 100°C and an acid value of greater than or equal to about 90 mg KOH/g, and is independently selected from:

(i) a mixture of long-chain aliphatic carboxylic acids and long-chain aliphatic carboxylic acid esters; and
(ii) long-chain aliphatic carboxylic acids, and optionally the one or more fillers, described herein.

In one embodiment, the transparent white composition comprises the one or more waxes, wherein each wax independently has a melting point less than about 100°C and an acid value of greater than or equal to about 90 mg KOH/g, and is independently selected from:

> (i) a mixture of long-chain aliphatic carboxylic acids and long-chain aliphatic carboxylic acid esters; and
> (ii) long-chain aliphatic carboxylic acids;

at about 5 to about 20 wt%, preferably about 7 to about 12 wt% described herein, the weight percentages being based on the total weight of the transparent white composition.

In one embodiment, the transparent white composition additionally comprises the one or more additional waxes having a melting point of greater than 100°C, for example having a melting point of about 120-130°C. When present, the additional waxes are preferably used at about 0.5 to about 5 wt%, more preferably about 1 to about 3 wt%, the weight percentages being based on the total weight of the transparent white composition.

In one embodiment, the transparent white composition comprises the one or more solvents (mineral and/or vegetable) having a boiling point at 760 mm Hg of more than 140°C, more preferably more than 160°C, particularly preferably more than 180°C described herein. Preferably the one or more solvents have a boiling point at 760 mm Hg of less than 350°C.

In one embodiment, at least one of the one or more solvents is a methyl ester synthetically derived from triglycerides of vegetable origin.

The one or more solvents are preferably present in a total amount from at about 2 to at or about 10 wt%, more preferably from at about 3 to at about 7 wt%, the weight percentages being based on the total weight of the transparent white composition.

In another embodiment, the transparent white additionally comprises the one or more fillers and/or extenders described herein, for example a mixture of talc and calcium carbonate. The one or more fillers and/or extenders are preferably present in the transparent white composition from at or about 25 to at or about 60 wt%, more preferably from at or about 35 to at or about 55 wt%, particularly preferably at or about 50 wt%, the weight percentages being based on the total weight of the transparent white composition.

The oxidatively drying intaglio ink comprises the one or more driers described herein. In one embodiment, the oxidatively drying intaglio ink comprises two or more driers such as those described herein, wherein at least one of the two or more driers is a manganese (Mn) salt and the other one is a cobalt (Co) salt, particularly one or more carboxylate salts of manganese (Mn) and one or more carboxylate salts of cobalt (Co), more particularly blends of a 2-ethylhexanoate salt of manganese (Mn) and a 2-ethylhexanoate salt of cobalt (Co).

In another embodiment, the oxidatively drying intaglio ink comprises three or more driers such as those described herein, wherein at least one of the three or more driers is a manganese (Mn) salt, another one is a cobalt (Co) salt and another one is a zirconium (Zr) salt, particularly blends of one or more carboxylate salts of of manganese (Mn), one or more carboxylates salt of cobalt (Co) and one or more carboxylate salts of zirconium (Zr), more particularly blends of a 2-ethylhexanoate salt of manganese (Mn), a 2-ethylhexanoate salt of cobalt (Co) and a 2-ethylhexanoate salt of zirconium (Zr).

In another embodiment, the oxidatively drying intaglio ink comprises three or more driers such as those described herein, wherein at least one of the three or more driers is a manganese (Mn) salt, another one is a zirconium (Zr) salt and another one is an iron (Fe) salts, particularly a particularly a blend of one or more carboxylate salts of manganese (Mn), one or more carboxylate salts of zirconium (Zr) and one or more complexes of iron (Fe), more particularly blends of neodecanoate salt of manganese (Mn), a neodecanoate saltsof zirconium (Zr) and a complex of iron (Fe).

In another preferred embodiment, at least one or more driers is chloro[re/-1,5-dimethyl (1$R$,2$S$,4$R$,5$S$)-9,9-dihydroxy-3-methyl-2,4-di(2-pyridinyl-$^{K/}$ $N$)-7-[(2-pyridinyl-$^{K/}$ $N$)methyl]-3,7-diazabicyclo[3.3.1]nonane-1,5-dicarboxy-late-$^{K/}$$N^3$,$^{K/}$$N^7$]-iron (1+) chloride (1:1) (CAS 478945-46-9) sold by Borchers as Borchi® OXY-Coat 1410, in particular together with manganese (Mn) and/or zirconium (Zr) salts, in particular manganese (Mn) neodecanoates and zirconium (Zr) neodecanoates.

In one embodiment, the one or more driers consists of a blend of 40 wt% of 2-ethylhexanoic acid, manganese (Mn) salt (preferably 8 wt% Mn, 50 wt% CAS No 15956-58-8 + 50 wt% CAS No 927-632-8), 48 wt% 2-ethylhexanoic acid, zirconium (Zr) salt (preferably 18 wt% Zr, 55 wt% CAS No 22464-99-9 + 45 wt% CAS No 918-481-9), 5.2 wt% 2-ethylhexanoic acid, cobalt (Co) salt (preferably 12 wt% Co, 75 wt% CAS No 136-52-7 + 25 wt% CAS No 927-632-8) and 6.8 wt% 2-(2-ethoxyethoxy)ethanol, the weight percentages being based on the total weight of the mixture.

In another embodiment, the one or more driers consists of a blend of 42 wt% neodecanoic acid, manganese (Mn) salt (preferably 15 wt% Mn, 63 wt% CAS No 27253-32-3 + 37 wt% CAS No 918-481-9), 38 wt% neodecanoic acid, zirconium (Zr) salt (preferably 16 wt% Zr, 75 wt% CAS No 39049-04-2 + 25 wt% CAS No 918-481-9), 0.3 wt% iron(1+) (Fe), chloro[dimethyl 9,9-dihydroxy-3-methyl-2,4-di(2-pyridinyl-$^{\cdot KI}$N)-7-[(2-pyridinyl-$^{\cdot KI}$N)methyl]-3,7-diazabicyclo[3.3.1]nonane (preferably 8.5 wt% Fe, 75 wt% CAS No 39049-04-2 + 25 wt% CAS No 918-481-9) and 19.7 wt% propane-1,2-diol, the weight percentages being based on the total weight of the mixture.

The inks of the invention are preferably made by mixing the varnish paste and the transparent white composition into a paste, and then mixing in the one or more driers.

In one embodiment, the following amounts are used:

from at or about 30 to at or about 50 wt%, preferably from at or about 35 to at or about 45 wt%, more preferably about 39 wt% of the varnish paste;

from at or about 45 to at or about 65 wt%, preferably from at or about 50 to at or about 60 wt%, more preferably about 58.5 wt% of the transparent white composition; and

from at or about 0.5 to at or about 5 wt%, preferably from at or about 1 to at or about 4 wt%, more preferably about 2.5 wt% of the one or more driers.

**Process**

The invention extends to a process for producing a security feature on a substrate by an intaglio printing process, said process comprising the steps:

A) inking an intaglio engraved printing plate with an oxidatively drying intaglio ink, said oxidatively drying intaglio ink comprising:

(1) the one or more oxidatively drying varnishes described herein;
(2) the one or more driers described herein;
(3) the one or more fillers described herein; and
(4) the one or more waxes, wherein each wax independently has a melting point less than about 100°C and an acid value of greater than or equal to about 90 mg KOH/g, and is independently selected from:

(i) a mixture of long-chain aliphatic carboxylic acids and long-chain aliphatic carboxylic acid esters; and
(ii) long-chain aliphatic carboxylic acids,

described herein;

B) removing excess oxidatively drying intaglio ink;
C) transferring the oxidatively drying intaglio ink in the form of the security feature on the substrate; and
D) drying the oxidatively drying intaglio ink in the presence of air so as to form the security feature.

In one embodiment, the engraved printing plate is made of engraved metal, and the printing plate forms part of a cylinder.

In another embodiment, the excess oxidatively drying intaglio ink is removed using a disposable fibrous material such as for example a paper or a tissue wiping system ("calico"), or a polymeric roll wiping system ("wiping cylinder"). Since the use of these fibrous materials results in massive quantities of ink-impregnated waste to dispose of, representing potential environmental hazards, and because of the printing speed on an industrial printing press, it is preferred that the ink excess is removed with the polymeric wiping cylinder and a cleaning/wiping solution to clean the polymeric wiping cylinder.

In one embodiment, the substate is selected from papers or other fibrous materials (including woven and nonwoven fibrous materials), such as cellulose, paper-containing materials, glasses, metals, ceramics, plastics and polymers, metallized plastics or polymers, composite materials and mixtures or combinations of two or more thereof. Typical paper, paper-like or other fibrous materials are made from a variety of fibers including without limitation abaca, cotton, linen, wood pulp, and blends thereof. As is well known to those skilled in the art, cotton and cotton/linen blends are preferred for banknotes, while wood pulp is commonly used in non-banknote value documents. Typical examples of plastics and polymers include polyolefins such as polyethylene (PE) and polypropylene (PP) including biaxially oriented polypropylene (BOPP), polyamides (PA), polyesters such as poly(ethylene terephthalate) (PET), polyethylene terephthalate glycol-modified (PETG) including poly(ethylene glycol-co-1,4-cyclohexanedimethanol terephthalate), poly(1,4-butylene terephthalate) (PBT), poly(ethylene 2,6-naphthoate) (PEN) and polyvinylchlorides (PVC). Spunbond olefin fibers such as those sold under the trademark Tyvek® may also be used as substrate. Typical examples of metalized plastics or polymers include the plastic or polymer materials described hereabove having a metal disposed continuously or discontinuously on their surface. Typical example of metals include without limitation aluminum (Al), chromium (Cr), copper (Cu), gold (Au), silver (Ag), alloys thereof and combinations of two or more of the aforementioned metals. The metallization of the plastic or polymer materials described hereabove may be done by an electrodeposition process, a high-vacuum coating process or by a sputtering process. Typical examples of composite materials include without limitation multilayer structures or laminates of paper and at least one plastic or polymer material such as those described hereabove as well as plastic and/or polymer fibers incorporated in a paper-like or fibrous material such as those described hereabove. Of course, the substrate can comprise further additives that are known to the skilled person, such as fillers, sizing agents, whiteners, processing aids, reinforcing or wet strengthening agents, etc. With the aim of further increasing the security level and the resistance against counterfeiting and illegal reproduction of value documents, the substrate may contain watermarks, security threads, fibers, planchettes, luminescent compounds, windows, foils, decals, coatings and combinations thereof.

**Security feature**

The invention provides a security feature made by the process of the invention, as well as a security feature comprising the ink of the invention, in a dried form, in the form of one or more indicia on a substrate.

The security feature of the invention is made by applying the ink of the invention in the form of one or more indicia by an intaglio printing process to a substrate, and allowing the ink to dry by exposure to air/oxygen.

**EXAMPLES**

The present invention is now described in more detail with reference to non-limiting examples.

The ingredients used in comparative inks C1 - C2 and inventive inks E1 - E4 are listed in Table 1.

| Table 1. Ingredients | | |
|---|---|---|
| **Name** | **Chemistry** | **Function** |
| Urethane-alkyd U1 | reaction product (58.7 wt%) of triglycerides and/or fatty acids of vegetable origin, polyols, aliphatic or aromatic diacids and/or aliphatic or aromatic anhydrides and diisocyanates, diluted with *n*-dodecane (41.3 wt%, CAS No. 112-40-3) | Varnishes |
| Urethane-alkyd U2 | reaction product (62.7 wt%) of triglycerides and/or fatty acids of vegetable origin, polyols, aliphatic or aromatic diacids and/or aliphatic or aromatic anhydrides and diisocyanates, diluted with rapeseed oil fatty acid methyl esters (37.3 wt%, Esti Chem, CAS No. 85586-25-0). | |
| Phenolic resin P1 | 42.4 wt% phenolic modified rosin ester (Bremapal 2035, Kraemer) cooked in 42.4 wt% tung oil (Interfat, CAS No 8001-20-5), then diluted with 15.2 wt% n-dodecane (Haltermann, CAS No 112-40-3) | |
| Phenolic resin P2 | 42.4 wt% phenolic modified rosin ester (Bremapal 2035, Kraemer) cooked in 42.4 wt% tung oil (Interfat, CAS No 8001-20-5), then diluted with 15.2 wt% rapeseed oil fatty acid methyl esters (ESTI Chem, CAS No 85586-25-0) | |
| Partially neutralized acidified polyester | condensation product of conjugated sunflower oil fatty acids (A. Sit Trading, CAS No 68953-27-5), isophthalic acid (Penpet, CAS No 121-91-5), tetrahydrophthalic anhydride (Polynt, CAS No 85-43-8), trimethylolpropane (Sikem, CAS No 77-99-6) and pentaerythritol (Penpet, CAS No 117-77-5), diethyleneglycolmonoethylether (Brenntag, CAS No 111-90-0), neutralized with potassium hydroxide 40 wt% solution (CAS No 1310-58-3) and dodecyl benzenesulfonic acid salt of 2-amino-propane (Zephrym™ 3300B, Croda, CAS No 84961-74-0), | |
| Inorganic filler limestone | Omyalite® 50 (Omya), limestone (calcium carbonate), CAS No 1317-65-3, particle size $d_{50} <$ 2 microns | Fillers |
| Inorganic filler talc | Luzenac talc (Imerys), mixture of 50 wt% talc (CAS No 14807-96-6), 47-wt% chlorite-group minerals (CAS No 1318-59-8), 2 wt% dolomite (CAS No 16389-88-1) and 1 wt% silica (CAS No 14808-60-7) | |

(continued)

| Table 1. Ingredients | | |
|---|---|---|
| **Name** | **Chemistry** | **Function** |
| Blue coloring agent | Pigment blue (Pigment blue 15:3, Ningbo Esynchem, CAS No 147-14-8) | Coloring agents |
| Purple coloring agent | Pigment purple (CROMOPHTAL VIOLET S 5800, BASF, CAS No 215247-95-3) | |
| White coloring agent | Pigment white (Pigment white 6, Lomon Billions, CAS No 13463-67-7) | |
| Manganese drier 1 | Octa-Soligen® Manganese oil (Borchers), 50 wt% $Mn^{2+}$ salt of 2-ethylhexanoic acid (CAS Nr 15956-58-8) dissolved in 50 wt% $C_{14}$-$C_{18}$ isoalkanes (CAS No 927-632-8) | Driers |
| Manganese drier 2 | neodecanoic acid, Manganese salt (BORCHERS, 15 wt% Mn, 63 wt% CAS No 27253-32-3 + 37 wt% CAS No 918-481-9) | |
| Cobalt drier | Octa-Soligen® Cobalt oil (Borchers), 75 wt% $Co^{2+}$ salt of 2-ethylhexanoic acid (CAS 136-52-7) dissolved in 25 wt% $C_{14}$-$C_{18}$ isoalkanes (CAS No 927-632-8) | |
| Zirconium drier 1 | Octa-Soligen® Zirconium (Borchers) 2-ethylhexanoic acid, Zirconium salt (, 18 wt% Zr, 55 wt% CAS No 22464-99-9 + 45 wt% CAS No 918-481-9) | |
| Zirconium drier 2 | neodecanoic acid, Zirconium salt (Borchers, 16 wt % Zr, 75 wt % CAS No 39049-04-2 + 25 wt% CAS No 918-481-9) | |
| Iron drier | Borchers® SA2117 (Borchers), Iron(1+), chloro[dimethyl 9,9-dihydroxy-3-methyl-2,4-di(2-pyridinyl-$^{.\kappa I}$N)-7-[(2-pyridinyl-κN)methyl]-3,7-diazabicyclo[3.3.1]nonane (8.5 wt% Fe, 1.75 wt% CAS No 478945-46-9+ 98.25 wt% CAS No 57-55-6) | |
| Mineral solvent | *n*-undecane (Haltermann, CAS No 1120-21-4) | Solvents |
| Solvent of vegetable origin | rapeseed oil fatty acid methyl esters (Esti Chem, CAS No 85586-25-0) | |
| Tung oil | tung oil (vegetable origin) (Interfat, CAS No 8001-20-5) | |
| PE wax | Ceridust™ 8330 (Clariant), renewable polyethylene polymer wax, melting point 126°C[1] | High-melting wax |

[1] The melting point was measured using a DSC131 Evo (Setaram) by heating the sample from 15°C to 200°C at 5°C /min under nitrogen.

| Table 1. Ingredients | | |
|---|---|---|
| **Name** | **Chemistry** | **Function** |
| Carnauba wax | Carnauba wax T1+T3 (A. Smit Trading AG), aliphatic esters (40 wt%), diesters of 4-hydroxycinnamic acid (21.0 wt%), ω-hydroxycarboxylic acids (13.0 wt%), and fatty alcohols (12 wt%) derived from C26-C30 acids and alcohols | Low-melting wax |
| Wax WARADUR® S-R | Voelpker AG, C19-C32 aliphatic carboxylic acid esters (62-68%), C26-C30 aliphatic carboxylic acids (22-26%), renewable origin | Low-melting wax |
| Wax Ceridust™ 1061 | Clariant AG, mixture of aliphatic acids (C16-C22) and higher alcohol esters, renewable origin | Low-melting wax |

The two urethane alkyd varnishes U1 and U2 comprise identical compounds in the same proportions, except for the solvent.

The waxes used in comparative ink C1 - C2 and inventive inks E1 - E4 are detailed in Table 2.

| Table 2. Waxes used in comparative examples C1-C2 and inventive examples E1-E4 | | | | | | |
|---|---|---|---|---|---|---|
| Wax | Chemical composition | CAS no. | Drop point[2] | Melting point[3] | Acid value[4] | Saponification value[5] |
| | | | [°C] | | [mg KOH/g] | |
| W1 | Carnauba wax | 8015-86-9 | 81-89 | 83-90 | 2-7 | 53-83 |
| W2 | WARADUR® S-R wax | -- | 81-89 | 78-85 | 125-145 | 155-185 |
| W3 | Ceridust™ 1061 wax | -- | 72-80 | 76-84 | 115-135 | 135-165 |

**Preparation of oxidatively drying intaglio inks (E1 - E4 and C1-C2)**

Inks according to the invention are designated with an "E" (E1 - E4) and comparative inks are designated with a "C" (C1 - C2).

Oxidatively drying intaglio inks (E1 - E4 and C1 - C2, see Table 6) were prepared from three compositions: a varnish paste (VP1 - VP2, see Table 3), a transparent white composition (TW1 - TW4, see Table 4) and a blend of driers (D1 - D2, see Table 5).

The wax (W1 - W3) was added during the production of the transparent white compositions (TW1 - TW4) as described in Table 4.

The driers were added to the dispersed mixture of the transparent white compositions (TW1 - TW4) and the varnish pastes (VP1 - VP2), to generate the final intaglio inks (E1 - E4 and C1 - C2), in the proportions listed in Table 6. The final compositions of the inks are shown in Table 7.

To prepare the varnish paste, the ingredients listed in Table 3 were mixed at room temperature using a Speedmixer for 3 minutes at 2500 rpm. They were then ground on a Buehler three-roll mill (model SDW200) in three passes with pressures of 5, 11 and 11 bars, so as to produce the varnish paste.

| Table 3. Ingredients in varnish paste (VP) | | |
|---|---|---|
| Ingredient | VP1 | VP2 |
| | wt% | |
| Urethan alkyd U1 | 34.6 | -- |

[2] The drop point was measured on a DP70 (Mettler Toledo) Heating a solid sample of wax from 73°C to 92°C at 0.5°C/min.

[3] The melting point was measured using a DSC131 Evo (Setaram) by heating the sample from 10°C to 120°C at 10°C/min under nitrogen.

[4] ASTM D1386-98

[5] ASTM D1387-89

| Table 3. Ingredients in varnish paste (VP) | | |
|---|---|---|
| Ingredient | VP1 | VP2 |
| | wt% | |
| Phenolic resin P1 | 15.4 | -- |
| Urethan alkyd U2 | -- | 34.6 |
| Phenolic resin P2 | -- | 15.4 |
| Blue coloring agent | 10.3 | 10.3 |
| Purple coloring agent | 5.1 | 5.1 |
| White coloring agent | 5.1 | 5.1 |
| Limestone | 26.9 | 26.9 |
| Talc | 2.6 | 2.6 |

The transparent whites (TW1 - TW4) were prepared by mixing the ingredients listed in Table 4 using a Speedmixer (3 minutes at 2,500 rpm), then ground on a Buehler three-roll mill (model SDW200) in three passes with pressures of 5, 11, and 16 bars.

| Table 4. Composition of transparent whites used in the inks of the invention | | | | |
|---|---|---|---|---|
| Ingredients | TW1 | TW2 | TW3 | TW4 |
| | wt% | | | |
| Partially neutralized acidified polyester | 33.3 | | | |
| W1 | 9.1 | 9.1 | -- | -- |
| W2 | -- | -- | 9.1 | -- |
| W3 | | | | 9.1 |
| PE Wax | 2.1 | 2.1 | 2.1 | 2.1 |
| Mineral solvent | 3.4 | -- | -- | -- |
| Solvent of vegetable origin | 1.7 | 5.1 | 5.1 | 5.1 |
| Tung oil | 2.6 | | | |
| Inorganic filler talc | 2.6 | | | |
| Inorganic filler limestone | 45.2 | | | |

The blend of driers D1 was prepared by mixing the ingredients listed in Table 5 by hand. The driers in D2 were simply added separately and essentially simultaneously to the blend of varnish paste and the transparent white.

| Table 5. Ingredients in drier | | | Metal wt% |
|---|---|---|---|
| Drier | Ingredient | wt% | |
| D1 | Manganese drier 1 | 40.0 | 3.20 |
| | Zirconium drier 1 | 48.0 | 8.64 |
| | Cobalt drier | 5.2 | 0.62 |
| | 2-(2-ethoxyethoxy)ethanol (Brenntag, CAS No 111-90-0) | 6.8 | -- |
| D2 | Manganese drier 2 | 42.0 | 6.30 |
| | Zirconium drier 2 | 38.0 | 6.08 |
| | Iron drier | 0.3 | 0.03 |
| | Propane-1,2-diol (Borchers, CAS No 57-55-6) | 19.7 | -- |

The oxidatively drying intaglio inks (E1 - E4 and C1 - C2) described in Table 7 were prepared according to the following steps:

- the respective varnish paste (VP1 - VP2) and the respective transparent white compositions (TW1 - TW4) were mixed using a three-roll mill, by mixing on 2 cylinders VP1-2 & TW1-4 (approx. 20 sec.).
- the blend of driers (D1) or the individual driers (D2) were added to the dispersed pastes obtained in the previous step and further mixed with the three-roll mill in the same manner, followed by an open pass at 5 bars. The mixing proportions for all inks are listed in Table 6. For D2, the iron component was mixed in separately from the manganese and zirconium components.

The viscosities of the oxidatively drying intaglio inks (C1 - C2 and E1 - E4) were measured using a Haake Roto Visco RV1 rotational rheometer, using a cone plate of 20 mm diameter and a 0.5° geometry, at a shear rate of $1,000\ s^{-1}$ and a temperature of 40°C. The results are reported in Table 6.

**Table 6. Mixing proportions for comparative (C1-C2) and inventive (E1-E4) oxidatively drying intaglio inks (wt%)**

| Ingredient | C1 | C2 | E1 | E2 | E3 | E4 |
|---|---|---|---|---|---|---|
| VP1 | 39.0 | -- | -- | -- | -- | -- |
| VP2 | -- | 39.0 | 39.0 | 39.0 | 39.0 | 39.0 |
| TW1 | 58.5 | -- | -- | -- | -- | -- |
| TW2 | -- | 58.5 | -- | -- | -- | -- |
| TW3 | -- | -- | 58.5 | -- | 58.5 | -- |
| TW4 | -- | -- | -- | 58.5 | -- | 58.5 |
| D1 | 2.5 | 2.5 | 2.5 | 2.5 | -- | -- |
| D2 | -- | -- | -- | -- | 2.5 | 2.5 |
| Viscosity [Pas] | 12.7 | 16.1 | 10.9 | 12.3 | 12.5 | 11.1 |

**Table 7. Final compositions of comparative (C1-C2) and inventive (E1-E4) oxidatively drying intaglio inks (wt%)**

| Ingredient | C1 | C2 | E1 | E2 | E3 | E4 |
|---|---|---|---|---|---|---|
| Urethan alkyd U1 | 7.92 | -- | -- | -- | -- | -- |
| Phenolic resin P1 | 2.55 | -- | -- | -- | -- | -- |
| Urethan alkyd U2 | -- | 8.46 | 8.46 | 8.46 | 8.46 | 8.46 |
| Phenolic resin P2 | -- | 2.55 | 2.55 | 2.55 | 2.55 | 2.55 |
| Partially neutralized acidified polyester | 19.50 | 19.50 | 19.50 | 19.50 | 19.50 | 19.50 |
| W1 | 5.30 | 5.30 | -- | -- | -- | -- |
| W2 | -- | -- | 5.30 | -- | 5.30 | -- |
| W3 | -- | -- | -- | 5.30 | -- | 5.30 |
| PE Wax | 1.20 | 1.20 | 1.20 | 1.20 | 1.20 | 1.20 |
| Coloring agents | 8.00 | 8.00 | 8.00 | 8.00 | 8.00 | 8.00 |
| Limestone | 37.00 | 37.00 | 37.00 | 37.00 | 37.00 | 37.00 |
| Talc | 2.50 | 2.50 | 2.50 | 2.50 | 2.50 | 2.50 |
| Tung oil | 4.04 | 4.04 | 4.04 | 4.04 | 4.04 | 4.04 |
| D1 | 1.26 | 1.26 | 1.26 | 1.26 | -- | -- |
| 2-(2-ethoxyethoxy)ethanol | 0.17 | 0.17 | 0.17 | 0.17 | -- | -- |
| D2 | -- | -- | -- | -- | 1.38 | 1.38 |
| Propane-1,2-diol | -- | -- | -- | -- | 0.49 | 0.49 |
| Mineral solvent | 9.56 | 1.07 | 1.07 | 1.07 | 0.63 | 0.63 |
| Solvent of vegetable origin | 100 | 8.95 | 8.95 | 8.95 | 8.95 | 8.95 |

## B. Preparation of intaglio printed samples and set-off characteristics (Table 9)

The so-obtained blue oxidatively drying intaglio inks (C1 - C2 and E1 - E4) were independently applied by hand using an Ormag intaglio proof-press. An intaglio engraved printing plate was used to prepare the intaglio printed samples, wherein said plate comprised a set of "U"-shaped engravings of various depths (from about 20 $\mu$m to about 100 $\mu$m) and widths (from about 60 $\mu$m to about 500 $\mu$m) such as to mimic an intaglio printed feature on a banknote.

The intaglio engraved printing plate was independently inked with each of the blue oxidatively drying intaglio inks using a polymer hand-roller (step A)), wherein said plate had a printing plate temperature at 65°C.

18

Subsequently to the step A), the excess of said inks was manually wiped off from the printing plate with paper, leaving ink only in the engravings (step B)).

Subsequently to the step B), the blue oxidatively drying intaglio inks were independently printed (step C)) with a pressure of approximately 100 MPa in the form of a security feature on a blank sheet of cotton fiduciary paper (Cotton banknote paper - Louisenthal) or coated cotton fiduciary paper (LongLife™ - Louisenthal).

The total residence time of the ink (including inking, wiping off the excess of ink and ink transferring) was about 15 seconds. While the blue oxidatively drying intaglio inks have been exposed for about 15 seconds to the intaglio engraved printing plate to prepare the samples (C1 - C2 and E1 - E4) with an intaglio laboratory press, industrial processes are much shorter and typically involve an exposure of the oxidatively drying intaglio inks to the intaglio engraved printing plate for a time which is typically less than one second.

For each intaglio printed sample, five samples were printed on each fiduciary paper. Immediately after the printing process, the printed substrates were stacked to form a pile with an interleaved blank sheet between said substrates. The pile was placed between two glass plates and was kept 24 hours at 22°C and 50% RH (relative humidity) under 3 kg pressure to mimic a pile of 1500 printed substrates. The printed substrates were then removed from the pile and the blank sheet corresponding to each printed substrate was assessed in terms of set-off characteristics according to the following procedure:

The so-obtained blue oxidatively drying intaglio inks (C1 - C2 and E1 - E4 ) were independently applied by hand using an Ormag intaglio proof-press. An intaglio engraved printing plate was used to prepare the intaglio printed samples, wherein said plate comprised a set of "U"-shaped engravings of various depths (from about 20 $\mu$m to about 100 $\mu$m) and widths (from about 60 $\mu$m to about 500 $\mu$m) such as to mimic an intaglio printed feature on a banknote.

The intaglio engraved printing plate was independently inked with each of the blue oxidatively drying intaglio inks using a polymer hand-roller (step a)), wherein said plate had a printing plate temperature at 65°C.

Subsequently to the step A), the excess of said inks was manually wiped off from the printing plate with paper, leaving ink only in the engravings (step B)).

Subsequently to the step B), the blue oxidatively drying intaglio inks were independently applied (step C)) in the form of a security feature on the two different types of fiduciary papers described hereabove.

Subsequently to the step C), the applied inks were independently dried in the presence of air so as to form the security feature (step D)).

The total residence time of the ink (including inking, wiping off the excess of ink and ink transferring) was about 15 seconds. While the blue oxidatively drying intaglio inks have been exposed for about 15 seconds to the intaglio engraved printing plate to prepare the samples (C1 - C2 and E1 - E4) with an intaglio laboratory press, industrial processes are much shorter and typically involve an exposure of the oxidatively drying intaglio inks to the intaglio engraved printing plate for a time which is typically less than one second.

For each intaglio printed sample, five samples were printed on each fiduciary paper. Immediately after the printing process, the printed substrates were stacked to form a pile with an interleaved blank sheet between said substrates. The pile was placed between two glass plates and was kept 24 hours at 22°C and 50% RH (relative humidity) under 3 kg pressure to mimic a pile of 1500 printed substrates. The printed substrates were then removed from the pile and the blank sheet corresponding to each printed substrate was assessed in terms of set-off characteristics according to the following procedure:

i. a series of blank sheets obtained in the same way and corresponding to different levels of set-off was sorted out by a person skilled in the art to design a visual scale having values between 1 and 12, wherein "1" corresponds to the maximal set-off (i.e. all intaglio lines were reported on the blank sheet) and "12" corresponds to the minimal set-off (i.e. almost no ink was transferred to the blank sheet), one sample corresponding to one value of the visual scale;

ii. the same series of blank sheets was analyzed at the pixel level to provide a correlation curve between the values of the visual scale and the number of transferred pixels due to set-off. Each sample was scanned using an Epson Perfection V500 scanner at 600 dpi to get a picture that was analyzed with Photoshop CC. The absolute number of transferred pixels was determined using the histogram and expressed as the percentage of transferred pixels compared to the sample having "1" as visual scale value, i.e. the sample exhibiting the maximal set-off;

iii. a graph was established with the percentage of transferred pixels (relative scale obtained in ii.) on the x-axis and the visual scale on the y-axis (circular dots). A regression curve (dashed line) having the following equation was established from the experimental data:

$$\text{transferred pixels (interpolated)} = 2.295 * 10^{-0.2189\,*\,\text{(visual value)}}\ (R^2 = 0.9887)$$

iv. according to the equation, the number of transferred pixels significantly decreases (about 40%) for each additional value of the visual scale. Table 5 displays the visual value, the absolute number of transferred pixels, the percentage of transferred pixels as determined in b) and the interpolated value obtained from the equation of the regression curve in iii.;

v.

| Table 8 | | | |
|---|---|---|---|
| Visual scale | Transferred pixels (absolute value) | Transferred pixels (relative value) | Interpolated percentage of transferred pixels |
| 1 | 289657 | 1000 % | n/a* |
| 2 | 259658 | 89.6 % | n/a |
| 3 | 195038 | 67.3% | n/a |
| 4 | 103328 | 35.7 % | n/a |
| 5 | 57417 | 19.8 % | 18.5 % |
| 6 | 29936 | 10.3 % | 11.2 % |
| 7 | 20128 | 6.9 % | 6.7 % |
| 8 | 11204 | 3.9 % | 4.1 % |
| 9 | 6446 | 2.2 % | 2.5 % |
| 10 | 3280 | 1.1 % | 1.5 % |
| 11 | 2355 | 0.8 % | 0.9 % |
| 12 | 2116 | 0.7% | 0.5 % |
| * interpolated percentages of transferred pixels are indicated as "n/a" for visual scale values smaller than 5 due to the discrepancy between the actually transferred pixels and the calculated ones at high set-off (regression curve of Figure 1) | | | |

vi. the blank sheets corresponding to each series of five printed samples (C1 - C2 and E1 - E4), were independently assessed by comparing them with the samples of the visual scale described in i. The values provided in Table 9 correspond to an average of five visual values, one for each printed sample. The number of transferred pixels was interpolated from the average visual value according to the equation displayed in iii.

A "6.5" as visual value corresponds to about 8.7 % of transferred pixels and indicates an industrially acceptable set-off value for the printed intaglio samples.

Set-off characteristics are provided in Table 9, wherein set-off values are indicated as visual values comprised between 1 and 12, and interpolated percentage of transferred pixels (using the equation in iii.).

The determination of the set-off characteristics was rendered easy since the oxidatively drying intaglio inks (C1 - C2 and E1 - E4 ) were dark and the contrast between the blank sheets and the transferred pixels was high (both visually and using the scanner).

An appreciation of set-off has been made on the basis of the visual values and the interpolated transferred pixels. To be judged acceptable, an ink was required to have both a visual value greater than or equal to 6.5 and an interpolated percentage of transferred pixels of less than 8.7 %:

- *acceptable*: a visual value greater than or equal to 6.5 and an interpolated percentage of transferred pixels of less than or equal to 8.7%
- *unacceptable*: a visual value smaller than 6.5 or an interpolated percentage larger than 8.7%.

As shown in Table 9, the oxidatively drying intaglio ink C1 (mineral oil-based) fails the visual value and interpolated transferred pixel on both papers. Similarly, the oxidatively drying intaglio ink C2 shows poor set-off test results on both papers. This indicates that substrates printed with C1 and C2 cannot be stacked without set-off issues and cannot endure the high pressure of a second intaglio printing run after a reasonable drying time. However, inks E1 - E4 perform well in set-off tests on both papers, allowing substrates to be stacked without set-off issues and to withstand the high pressure of a second intaglio printing run after a reasonable drying time.

| Table 9. Set-off results | | | | | | | | | |
|---|---|---|---|---|---|---|---|---|---|
| Ink | Wax | Drier | Varnish | Standard cotton | | Passed | LongLife™ | | Passed |
| | | | | Set-off | | | Set-off | | |
| | | | | Visual | Interpolated transferred pixel (%) | | Visual | Interpolated transferred pixel (%) | |
| C1 | W1 | D1 | Mineral | 6.2 | 10.1 | No | 3.4 | 41.4 | No |
| C2 | W1 | D1 | Vegetable | 6.0 | 11.2 | No | 4.8 | 20.4 | No |
| E1 | W2 | D1 | Vegetable | 7.4 | 5.5 | Yes | 10.2 | 1.3 | Yes |
| E2 | W3 | D1 | Vegetable | 8.4 | 3.3 | Yes | 9.6 | 1.8 | Yes |
| E3 | W2 | D2 | Vegetable | 7.2 | 6.1 | Yes | 9.4 | 2.0 | Yes |
| E4 | W3 | D2 | Vegetable | 7.2 | 6.1 | Yes | 9.2 | 2.2 | Yes |

**Claims**

1.  An oxidatively drying intaglio ink, comprising:

    (1) one or more oxidatively drying varnishes;
    (2) one or more driers;
    (3) one or more fillers and/or extenders; and
    (4) one or more waxes, wherein each wax independently has a melting point less than about 100°C and an acid value of greater than or equal to about 90 mg KOH/g, and is independently selected from:

    (i) a mixture of long-chain aliphatic carboxylic acids and long-chain aliphatic carboxylic acid esters; and
    (ii) long-chain aliphatic carboxylic acids.

2.  The oxidatively drying intaglio ink according to claim 1, wherein each of the one or more waxes independently has a melting point of less than about 95°C, preferably less than about 90°C.

3.  The oxidatively drying intaglio ink according to claim 1 or 2, wherein the one or more waxes has a melting point greater than about 50°C, preferably greater than about 60°C, more preferably greater than about 70°C.

4.  The oxidatively drying intaglio ink according to any of one of claims 1 to 3, wherein the one or more waxes has an acid value greater than or equal to about 115 mg KOH/g, more preferably greater than or equal to about 118 mg KOH/g.

5.  The oxidatively drying intaglio ink according to any one of claims 1 to 4, wherein the one or more waxes is selected from those comprising $C_{12}$-$C_{36}$-carboxylic acids and esters of $C_{12}$-$C_{36}$-carboxylic acids, preferably from those comprising $C_{14}$-$C_{32}$-carboxylic acids and esters of $C_{14}$-$C_{32}$-carboxylic acids.

6.  The oxidatively drying intaglio ink according to claim 5, wherein the esters comprise an acid moiety and an alcohol moiety and the alcohol moiety of the esters is selected from $C_1$-$C_{36}$-alcohols, more preferably $C_{12}$-$C_{30}$-alcohols.

7.  The oxidatively drying intaglio ink according to any one of claims 1 to 6, wherein the one or more waxes is present in the ink at an amount of from about 2 to about 10 wt%, preferably from about 3 to about 7 wt%, more preferably about 4 to about 6 wt%, the weight percentages being based on the total weight of the oxidatively drying intaglio ink.

8.  The oxidatively drying intaglio ink according to any one of claims 1 to 7, which comprises a coloring agent at about 1 to about 20 wt%, preferably at about 2 to about 12 wt%, more preferably about 6 to about 10 wt%, the weight percentages being based on the total weight of the oxidatively drying intaglio ink.

9.  The oxidatively drying intaglio ink according to any one of claims 1 to 8, where the one or more driers is a mixture of a salt of manganese (Mn), a salt of zirconium (Zr) and a salt of iron (Fe).

10. The oxidatively drying intaglio ink according to any one of claims 1 to 9, which additionally comprises one or more solvents, selected from methyl esters of $C_{12}$-$C_{36}$-carboxylic acids, preferably methyl esters of $C_{14}$-$C_{32}$-carboxylic acids, preferably both of vegetable origin.

11. A method for making the oxidatively drying intaglio ink according to any one of claims 1 to 10, the method comprising mixing together:

   (1) the one or more oxidatively drying varnishes;
   (2) the one or more driers;
   (3) the one or more fillers and/or extenders; and
   (4) the one or more waxes, wherein each wax independently has a melting point less than about 100°C and an acid value of greater than or equal to about 90 mg KOH/g, and is independently selected from:

      (i) a mixture of long-chain aliphatic carboxylic acids and long-chain aliphatic carboxylic acid esters; and
      (ii) long-chain aliphatic carboxylic acids.

12. A method for making the oxidatively drying intaglio ink according to any one of claims 1 to 10, the method comprising the steps:

   (i) providing a varnish paste comprising the one or more oxidatively drying varnishes, optionally the one or more fillers, and optionally one or more coloring agents;
   (ii) providing a transparent white composition comprising the one or more waxes, wherein each wax independently has a melting point less than about 100°C and an acid value of greater than or equal to about 90 mg KOH/g, and is independently selected from:

      (a) a mixture of long-chain aliphatic carboxylic acids and long-chain aliphatic carboxylic acid esters; and
      (b) long-chain aliphatic carboxylic acids;

   optionally the one or more fillers and/or extenders, and optionally one or more coloring agents;
   (iii) providing the one or more driers;
   (iv) mixing the varnish paste, the transparent white and the one or more driers;

   wherein at least one of the varnish paste and the transparent white composition comprises the one or more fillers and/or the one or more coloring agents.

13. A method of printing comprising the following steps:

   (A) applying the oxidatively drying intaglio ink according to any one of claims 1 to 10 to a surface bearing an engraving in the form of one or more indicia;
   (B) removing excess of the oxidatively drying intaglio ink;
   (C) applying the surface with pressure to a substrate to transfer the ink in the engravings to the substrate.

14. A process for producing a security feature on a substrate by an intaglio printing process, said process comprising the steps:

   A) inking an intaglio engraved printing plate with the oxidatively drying intaglio ink according to any one of claims 1 to 10;
   B) removing excess of the oxidatively drying intaglio ink;
   C) transferring the oxidatively drying intaglio ink in the form of the security feature on the substrate; and
   D) drying the oxidatively drying intaglio ink in the presence of oxygen so as to form the security feature.

Europäisches
Patentamt

European
Patent Office

Office européen
des brevets

# EUROPEAN SEARCH REPORT

**Application Number**

EP 25 17 6491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/040271 A1 (KRUEGER JESSICA [CH] ET AL) 7 February 2019 (2019-02-07) * claims; par. 50-64, 68-72, 108; tab. 1a * | 1-14 | INV. C09D11/12 |
| X | US 2015/376422 A1 (LEFEBVRE OLIVIER [CH] ET AL) 31 December 2015 (2015-12-31) * claims; par. 105-107, 116-124, 140; tab.1 * | 1-14 | |
| X | US 2011/109076 A1 (GROSSET ANNE [CH] ET AL) 12 May 2011 (2011-05-12) * claims; par. 13, 30, 40-42, 70; examples 2+3 incl. tables * | 1-14 | |
| X | GB 1 470 655 A (BRADBURY WILKINSON CO LTD) 21 April 1977 (1977-04-21) * claims; par. 13, 30, 40-42, 70; examples 2+3 incl. tables * | 1-14 | |

**TECHNICAL FIELDS SEARCHED (IPC)**

C09D

The present search report has been drawn up for all claims

| Place of search | Date of completion of the search | Examiner |
|---|---|---|
| Munich | 27 October 2025 | von Zitzewitz, A |

EPO FORM 1503 03.82 (P04C01)

## ANNEX TO THE EUROPEAN SEARCH REPORT
## ON EUROPEAN PATENT APPLICATION NO.

EP 25 17 6491

27-10-2025

| Patent document cited in search report | | Publication date | Patent family member(s) | | Publication date |
|---|---|---|---|---|---|
| US 2019040271 | A1 | 07-02-2019 | AR | 107462 A1 | 02-05-2018 |
| | | | AU | 2017211954 A1 | 24-05-2018 |
| | | | CA | 3006540 A1 | 03-08-2017 |
| | | | CN | 108603057 A | 28-09-2018 |
| | | | DK | 3408337 T3 | 11-05-2020 |
| | | | EP | 3408337 A1 | 05-12-2018 |
| | | | ES | 2791314 T3 | 03-11-2020 |
| | | | HK | 1253904 A1 | 05-07-2019 |
| | | | HU | E051556 T2 | 01-03-2021 |
| | | | JP | 6870181 B2 | 12-05-2021 |
| | | | JP | 2019506485 A | 07-03-2019 |
| | | | KR | 20180105131 A | 27-09-2018 |
| | | | PL | 3408337 T3 | 27-07-2020 |
| | | | RU | 2018127541 A | 02-03-2020 |
| | | | TW | 201728699 A | 16-08-2017 |
| | | | US | 2019040271 A1 | 07-02-2019 |
| | | | WO | 2017129666 A1 | 03-08-2017 |
| US 2015376422 | A1 | 31-12-2015 | AR | 094808 A1 | 26-08-2015 |
| | | | AU | 2013378566 A1 | 11-06-2015 |
| | | | CA | 2893092 A1 | 21-05-2014 |
| | | | CN | 105143363 A | 09-12-2015 |
| | | | EP | 2956514 A1 | 23-12-2015 |
| | | | ES | 2683980 T3 | 01-10-2018 |
| | | | HK | 1216183 A1 | 21-10-2016 |
| | | | JP | 2016514173 A | 19-05-2016 |
| | | | KR | 20150118093 A | 21-10-2015 |
| | | | PH | 12015501802 A1 | 09-11-2015 |
| | | | RU | 2015139000 A | 20-03-2017 |
| | | | TW | 201441313 A | 01-11-2014 |
| | | | US | 2015376422 A1 | 31-12-2015 |
| | | | US | 2018273777 A1 | 27-09-2018 |
| | | | WO | 2014124718 A1 | 21-08-2014 |
| US 2011109076 | A1 | 12-05-2011 | AR | 072291 A1 | 18-08-2010 |
| | | | AU | 2009264338 A1 | 30-12-2009 |
| | | | BR | PI0914621 A2 | 08-12-2015 |
| | | | CA | 2728878 A1 | 30-12-2009 |
| | | | CN | 102066507 A | 18-05-2011 |
| | | | DK | 2297256 T3 | 30-03-2015 |
| | | | EA | 201170068 A1 | 30-08-2011 |
| | | | EP | 2297256 A1 | 23-03-2011 |
| | | | ES | 2532464 T3 | 27-03-2015 |
| | | | JP | 5569753 B2 | 13-08-2014 |
| | | | JP | 2011525549 A | 22-09-2011 |
| | | | KR | 20110025694 A | 10-03-2011 |

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 17 6491

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2025

| Patent document cited in search report | | Publication date | Patent family member(s) | | Publication date |
|---|---|---|---|---|---|
| | | | MY | 153059 A | 31-12-2014 |
| | | | PL | 2297256 T3 | 29-05-2015 |
| | | | PT | 2297256 E | 24-03-2015 |
| | | | TW | 201006896 A | 16-02-2010 |
| | | | US | 2011109076 A1 | 12-05-2011 |
| | | | WO | 2009156400 A1 | 30-12-2009 |
| GB 1470655 | A | 21-04-1977 | CA | 1035503 A | 01-08-1978 |
| | | | CH | 593326 A5 | 30-11-1977 |
| | | | DE | 2426849 A1 | 02-01-1975 |
| | | | DK | 299474 A | 03-02-1975 |
| | | | FR | 2232583 A1 | 03-01-1975 |
| | | | GB | 1470655 A | 21-04-1977 |
| | | | IT | 1011914 B | 10-02-1977 |
| | | | JP | S5027604 A | 20-03-1975 |
| | | | NO | 144892 B | 24-08-1981 |
| | | | SE | 411049 B | 26-11-1979 |

EPO FORM P0459

For more details about this annex : see Official Journal of the European Patent Office, No. 12/82

page 2 of 2

**REFERENCES CITED IN THE DESCRIPTION**

**Patent documents cited in the description**

- US 5074914 A
- US 5997622 A
- US 6001161 A
- JP 2080470 A
- JP 62190272 A
- JP 63218766 A
- US 4705300 A
- US 4705356 A
- US 4721271 A
- US 5084351 A
- US 5214530 A
- US 5281480 A
- US 5383995 A
- US 5569535 A
- US 5571624 A
- WO 2008083894 A2
- US 5211877 A
- US 5362315 A
- US 6423246 B
- EP 1213338 A1
- EP 1046692 A1
- EP 0601483 A1
- EP 0340163 B1
- EP 2014729 A1

**Non-patent literature cited in the description**

- *CHEMICAL ABSTRACTS*, 544-64-9
- *CHEMICAL ABSTRACTS*, 373-49-9
- *CHEMICAL ABSTRACTS*, 112-80-1
- *CHEMICAL ABSTRACTS*, 506-23-0
- *CHEMICAL ABSTRACTS*, 623-99-4
- *CHEMICAL ABSTRACTS*, 60-33-3
- *CHEMICAL ABSTRACTS*, 463-40-1
- *CHEMICAL ABSTRACTS*, 20290-75-9
- *CHEMICAL ABSTRACTS*, 506-32-1
- *CHEMICAL ABSTRACTS*, 141-22-0
- *CHEMICAL ABSTRACTS*, 112-86-7
- *CHEMICAL ABSTRACTS*, 29204-02-2
- *CHEMICAL ABSTRACTS*, 24880-45-3
- *CHEMICAL ABSTRACTS*, 68378-49-4
- *CHEMICAL ABSTRACTS*, 478945-46-9
- *CHEMICAL ABSTRACTS*, 215247-95-3
- *CHEMICAL ABSTRACTS*, 13463-67-7
- **G. PFAFF** ; **P. REYNDERS**. *Chem. Rev.*, 1999, vol. 99, 1963-1981
- *CHEMICAL ABSTRACTS*, 85586-25-0
- *CHEMICAL ABSTRACTS*, 01051-16-0
- *CHEMICAL ABSTRACTS*, 68919-54-0
- *CHEMICAL ABSTRACTS*, 68938-50-1
- *CHEMICAL ABSTRACTS*, 15956-58-8
- *CHEMICAL ABSTRACTS*, 927-632-8
- *CHEMICAL ABSTRACTS*, 22464-99-9
- *CHEMICAL ABSTRACTS*, 918-481-9
- *CHEMICAL ABSTRACTS*, 136-52-7
- *CHEMICAL ABSTRACTS*, 27253-32-3
- *CHEMICAL ABSTRACTS*, 39049-04-2
- *CHEMICAL ABSTRACTS*, 112-40-3
- *CHEMICAL ABSTRACTS*, 8001-20-5
- *CHEMICAL ABSTRACTS*, 68953-27-5
- *CHEMICAL ABSTRACTS*, 121-91-5
- *CHEMICAL ABSTRACTS*, 85-43-8
- *CHEMICAL ABSTRACTS*, 77-99-6
- *CHEMICAL ABSTRACTS*, 117-77-5
- *CHEMICAL ABSTRACTS*, 111-90-0
- *CHEMICAL ABSTRACTS*, 1310-58-3
- *CHEMICAL ABSTRACTS*, 84961-74-0
- *CHEMICAL ABSTRACTS*, 1317-65-3
- *CHEMICAL ABSTRACTS*, 14807-96-6
- *CHEMICAL ABSTRACTS*, 1318-59-8
- *CHEMICAL ABSTRACTS*, 16389-88-1
- *CHEMICAL ABSTRACTS*, 14808-60-7
- *CHEMICAL ABSTRACTS*, 147-14-8
- *CHEMICAL ABSTRACTS*, 57-55-6
- *CHEMICAL ABSTRACTS*, 1120-21-4
- *CHEMICAL ABSTRACTS*, 8015-86-9